# EUROPEAN PATENT SPECIFICATION

(11) **EP 1 452 430 B1**
(45) Date of publication and mention of the grant of the patent: **03.05.2006**
(21) Application number: 04100756.8
(22) Date of filing: 26.02.2004
(51) Int. Cl.: B62J 6/02, F21V 17/00, F21S 8/10

(54) **Discharge lamp device for vehicle**
Entladungslampe für ein Fahrzeug
Lampe à décharge pour véhicule

(30) Priority: 28.02.2003 JP 2003053300
(43) Date of publication of application: 01.09.2004
(73) Proprietor: HONDA MOTOR CO., Ltd., Tokyo (JP)
(72) Inventor: Yamamoto, Takao, Wako-shi, Saitama (JP)
(74) Representative: Poulin, Gérard

(56) References cited:
- US-A- 6 135 625
- PATENT ABSTRACTS OF JAPAN vol. 2000, no. 02, 29 February 2000 (2000-02-29) & JP 11 301341 A (MITSUBISHI AUTOMOB ENG CO LTD; MITSUBISHI MOTORS CORP), 2 November 1999 (1999-11-02)
- PATENT ABSTRACTS OF JAPAN vol. 1998, no. 13, 30 November 1998 (1998-11-30) & JP 10 208507 A (KOITO MFG CO LTD), 7 August 1998 (1998-08-07)

## Description

### Technical Field to which the Invention Belongs

The present invention relates to a discharge lamp device for vehicle, and more particularly to the structure for mounting a lighting circuit which controls lighting of the discharge lamp.

### Prior Art

Recently, the adoption of a discharge lamp device such as an HID lamp (High Intensity Discharge lamp) or the like having high brightness as a head lamp has been studied also with respect to motorcycles. Such a discharge lamp device requires a lighting circuit such as a starter and a ballast (stabilizer) and the like and hence, to simplify wiring of high voltage lines which connect the discharge lamp and the lighting circuit, the lighting circuit is arranged in front of a head pipe of a vehicle body frame and behind a head lamp (see patent document 1, for example) or a lighting circuit is accommodated in a casing of a head lamp (see patent document 2, for example).

### Patent Document 1

Japanese Unexamined Patent Publication Hei 11-198713.

### Patent Document 2

Japanese Unexamined Patent Publication Hei 11-238405.

### Problems that the Invention is to Solve

However, when the former arrangement constitution is adopted, the lighting circuit is assembled in a space defined between the head lamp and the head pipe and hence, the assembling operation becomes difficult. Further, when the latter arrangement constitution is adopted, the head lamp per se becomes large-sized and hence, there arises a drawback that the constitution imposes the restriction on the layout and the formability of a vehicle body.

Accordingly, it is an obj ect of the invention to enhance the assembling property of a lighting circuit while simplifying wiring of high voltage lines which connect a discharge lamp and the lighting circuit and to enhance the degree of freedom in layout and formability of a vehicle body.

### Means for Solving the Problem

As means for solving the above-mentioned problem, the invention defined in claim 1 is characterized in that in the inside of a bracket (a bracket 40, 140 in the embodiments, for example) which supports a discharge lamp (a head lamp 30, 130 in the embodiments, for example), a lighting circuit (a lighting circuit 60, 60' in the embodiments, for example) which controls lighting of the discharge lamp is mounted sandwitched and insulated.

According to this discharge lamp device for vehicle, it is possible to integrally form the bracket which supports the discharge lamp and the lighting circuit and hence, the lighting circuit can be arranged in the vicinity of the discharge lamp whereby the wiring of high-voltage lines which connect the lighting circuit and the discharge lamp can be simplified. Further, parts for supporting the lighting circuit and the assembling operation of the parts can be largely reduced and, at the same time, it is not necessary to make the discharge lamp large-sized for accommodating the lighting circuit.

The invention described in claim 2 is characterized in that the discharge lamp is arranged in front of a head pipe (a head pipe 6 in the embodiment, for example) of a body frame (a body frame 5 in the embodiment, for example), and the bracket supports the discharge lamp from sides of the discharge lamp.

According to this discharge lamp device for vehicle, by mounting the lighting circuit in the inside of the bracket which supports the discharge lamp from the sides of the discharge lamp, a space defined between the head pipe and the discharge lamp can be effectively utilized.

The invention described in claim 3 is characterized in that the bracket is formed of a metal member.

According to this discharge lamp device for vehicle, by effectively making use of the bracket formed of the metal member as a heat sink, the heat radiation property of the lighting circuit can be enhanced. Particularly, by forming the bracket using an aluminummember, it is possible to reduce the weight of the bracket and, at the same time, the heat conductivity can be increased so that the heat radiation property can be further enhanced.

### Brief Description of the Drawings

Fig. 1 : A side view of a motorcycle in the first embodiment of the invention.
Fig. 2 : A side view showing the periphery of a head pipe of the motorcycle.
Fig. 3 : An exploded perspective view of a steering stem and a head lamp.
Fig. 4 : A side view of the brackets which support the head lamp.
Fig. 5 : A cross-sectional view taken along a line A-A in Fig. 4.
Fig. 6 : An exploded perspective view corresponding to Fig. 3 of the second embodiment of the invention.
Fig. 7 : An exploded perspective view corresponding to Fig. 3 of the third embodiment of the invention.
Fig. 8 : A cross-sectional view corresponding to Fig.
5 showing another modification of the respective embodiments.

Description of the preferred embodiments of the invention

Hereinafter, a discharge lamp device for vehicle according to the invention is explained in conjunction with an example which applies the discharge lamp device for vehicle to a head lamp of a motorcycle based on drawings.

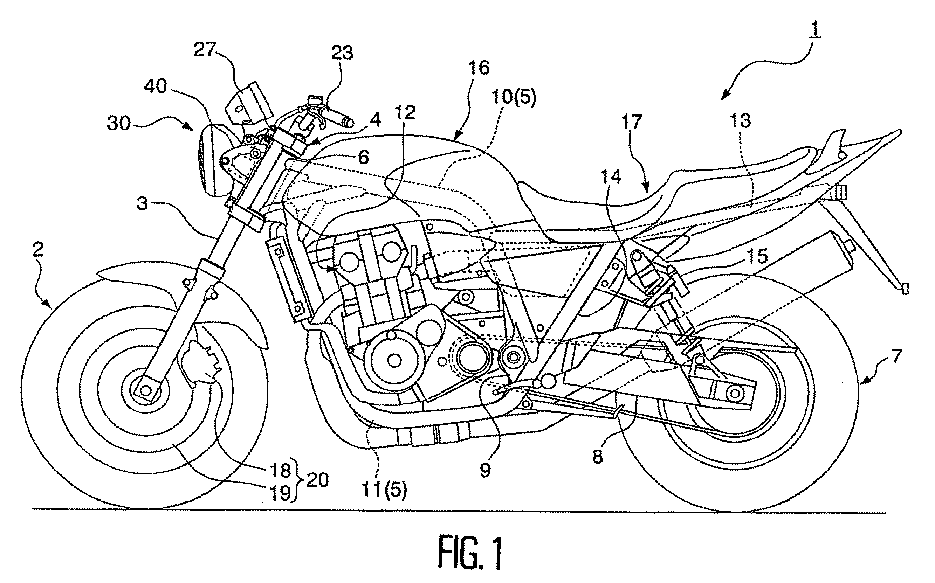

As shown in Fig. 1, a front fork 3 which rotatably supports a front wheel 2 of a motorcycle 1 is pivotally supported in a steerable manner on a head pipe 6 which is mounted on a front end portion of a body frame 5 by way of a steering stem 4. A rear fork 8 which pivotally supports a rear wheel 7 is pivotally and tiltably supported on a pivot portion 9 which is mounted on an intermediate portion of the body frame 5. The body frame 5 is a so-called double cradle type frame including a pair of main frames 10 which are bifurcated to left and right sides from a head pipe 6 provided at a front end of the body frame 5 and extend rearwardly and a down tube 11. A water-cooled engine 12 is mounted on a portion which is surrounded by the main frames 10 and the down tube 11. A sheet rail 13 is connected to rear sides of upper portions of the main frames 10 and an approximately intermediate portion of the sheet rail 13 and the pivot portion 9 are joined by a side pipe 14. A rear cushion 15 is provided between an upper end portion of the side pipe 14 and the rear fork 8. A fuel tank 16 is arranged above the main frames 10 and a sheet 17 is arranged above the sheet rail 13. A break caliper 18 is mounted on a lower portion of the front fork 3 and a brake rotor 19 corresponding to the brake caliper 18 is mounted on the front wheel 2 thus constituting a front brake device 20.

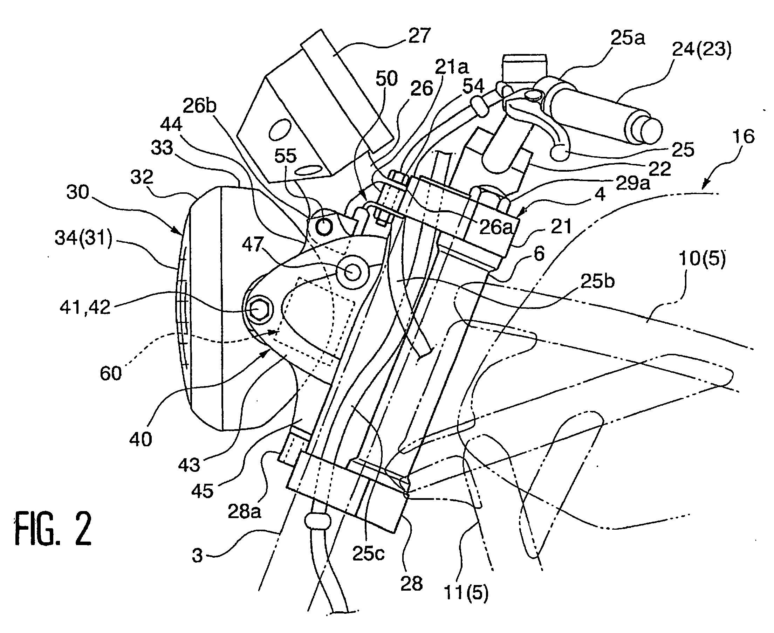

As shown in Fig. 2, a bar-type handle 23 is mounted on an upper portion of a top bridge 21 of the steering stem 4 by way of a handle post 22 and a clutch lever 25 is arranged in front of a left grip portion 24 of the handle 23. Here, a right grip portion of the handle 23 constitutes a throttle grip and a front brake lever is arranged in front of the right grip portion (both being omitted from the drawings) . A meter unit 27 which is supported on a meter stay 26 is arranged at an oblique upper front portion of the top bridge 21, while a discharge lamp type head lamp 30 which is supported by a pair of left and right brackets 40, 40 is arranged in front of the head pipe 6.

The head lamp 30 is a so-called HID lamp (High Intensity Discharge lamp) or the like. With the use of such a discharged bulb having no filaments, it is possible to perform the irradiation with high efficiency and with high brightness. At the time of lighting the head lamp 30, a high voltage is necessary and, at the same time, it is necessary to flow a fixed current after lighting. Lighting is controlled by a lighting circuit 60 constituted of a starter, a ballast (a stabilizer) and the like.

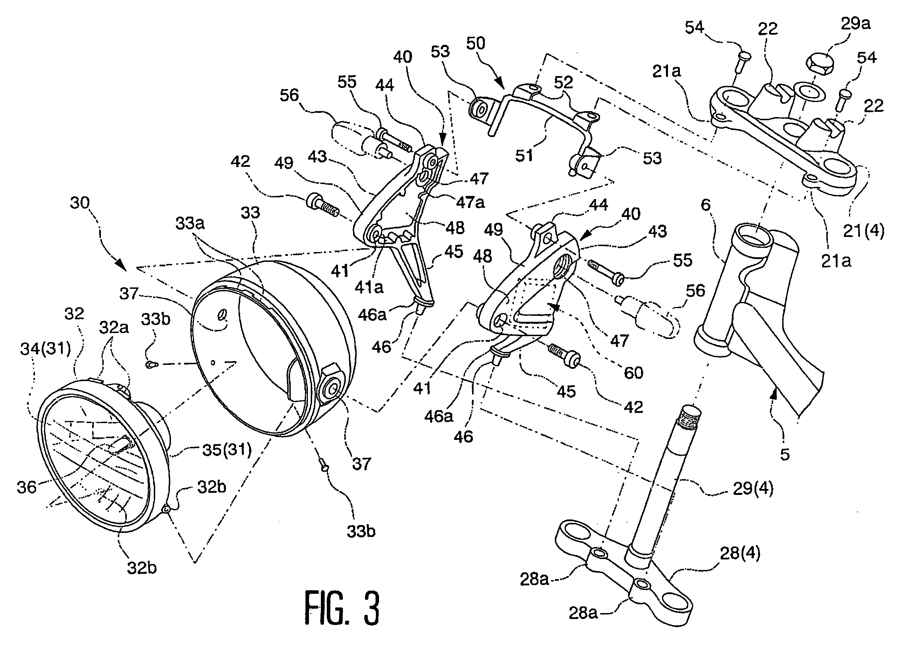

As shown in Fig. 3, a stem pipe 29 which is integrally fixed to a bottombridge 28 which extends in the left-and-right direction is mounted in the head pipe 6 in a penetrating manner such that the stem pipe 29 is rotatable about an axis thereof. The top bridge 21 is fixed to an upper end portion of the stem pipe 29 projecting from the head pipe 6 using a stem nut 29a such that the top bridge 21 assumes a state in which the top bridge 21 is arranged parallel to the bottom bridge 28. The steering stem 4 is mainly constituted of the top bridge 21, the stem pipe 29 and the bottom bridge 28, while the front forks 3 are respectively fitted in and fixed to fitting holes formed in both left and right end portions of the top bridge 21 and the bottom bridge 28.

The head lamp 30 includes a round one-lamp type lamp body 31, a rim portion 32 which is mounted on the outside of a peripheral portion of the lamp body 31, and a lamp case 33 which is formed in a dome shape rearwardly contiguous with the rim portion 32. The lamp body 31 includes a lens 34 and a reflector cover 35 and also includes a discharged-type lamp bulb 36 in the inside of a lamp body constituted by these parts. The lamp body 31 is joined to the rim portion 32 such that an optical axis thereof is adjustable in the left-and-right direction. By engaging engaging pawls 32a formed in the inside of an upper portion of the rim portion 32 with engaging potions 33a formed on an upper portion of an opening of the lamp case 33 and, at the same time, by screwing small bolts 33b which are inserted into both sides of the lower portion of the lamp case 33 into nut holes 32b formed in the rim portion 32, the rim portion 32 is fixed to the lamp case 33. Due to such a constitution, the lamp body 31 and the lamp case 33 are joined by way of the rim portion 32 thus forming the head lamp 30.

The head lamp 30 is arranged in front of the head pipe 6 and inside the brackets 40, 40 in the vehicle-width direction and hence, the head lamp 30 is held such that the head lamp 30 is sandwiched by the brackets 40, 40 from left and right sides. Through holes 41 are formed in front end portions of the respective brackets 40 such that the through holes 41 are arranged on an axis parallel in the left-and-right direction. By fastening the fixing bolts 42 which are inserted into respective insertion holes 41 into respective fixing nut holes 37, 37 which are formed in left and right outsides of the lamp case 33, it is possible to integrally fix the head lamp 30 and a pair of brackets 40, 40. Further, by loosening the respective fixing bolts 42, the head lamp 30 can be tiltable in the up-and-down direction so that the optical axis can be adjusted in the vertical direction.

Each bracket 40 is made of aluminum by die-casting, wherein a connection portion 44 which projects upwardly is formed by molding on an upper portion of an approximately triangular body 43, while a support arm 45 is formed on a lower portion of the body 43 by molding such that the support arm 45 extends downwardly and toward the inside of the vehicle-width direction. Further, the above-mentioned through hole 41 for supporting the head lamp 30 is formed in the front portion of the body 43, while a through hole 47 for mounting a front blinker 38 is formed in an upper side of a rear portion of the body 43. To a lower end of each support arm 45, a reception seat surface 46a which is formed substantially parallel to an upper surface of the bottom bridge 28 and a projection shaft 46 which projects downwardly from the reception seat surface 46a are respectively provided. Boss portions 28a, 28a in which the projection shafts 46 are fitted are respectively formed on both sides of a front portion of the bottombridge 28. Further, in a state that the projection shafts 46 are fitted in the boss portions 28a and, at the same time, the reception seat surfaces 46a are brought into contact with the upper surfaces of the boss portions 28a, the bracket 40 is supported on the bottom bridge 28 from below the bracket 40.

On the other hand, an upper portion of each bracket 40 is joined to the top bride 21 by way of a lamp stay 50. The lamp stay 50 includes a pair of left and right upper mounting portions 52, 52 for mounting the stay body 51 to the top bridge 21 and a pair of left and right front mounting portions 53, 53 corresponding to connection portions 44 of respective brackets 40. On both sides of the front portion of the top bridge 21, boss portions 21a, 21a corresponding to the respective upper mounting portions 52, 52 are formed. Further, by fixing the respective upper mounting portions 52 to the respective boss portions 21a using bolts 54 and by integrally fixing the respective connection portions 44 and the front mounting portions 53 using bolts 55, the upper portions of the respective brackets 40 are fixed to the top bridge 21 by way of the lamp stay. Due to such a constitution, the respective brackets 40 and the head lamp 30 are mounted on the steering stem 4.

Here, a front brake and a clutch of the motorcycle 1 are of a hydraulic type. As shown in Fig. 2, a clutch oil hose 25b which extends from a master cylinder integrally formed with a clutch lever holder 25a is arranged to pass behind the head lamp 30 and in front of the head pipe 6. Further, a brake oil hose 25c is, in the same manner, arranged to pass between the head lamp 30 and the head pipe 6. Further, a throttle cable which is connected to a throttle grip and harnesses and the like which are connected to a switch box and the like mounted on the handle 23 are also arranged to pass between the head lamp 30 and the head pipe 6 (none of them shown in the drawings). Here, fixing portions 26a, 26b of a meter stay 26 for supporting a meter unit 27 are commonly fastened by respective bolts 54, 55 whereby the meter unit 27 is mounted on the steering stem 4 by way of the meter stay 26.

As shown in Fig. 3, the through holes 41, 47 of each bracket 40 are formed in a bottom portion of a seat portion which is formed on an outer surface of the body 43 in a recessed manner in the vehicle width direction.

Here, a wall thickness of the inside of the body 43 of each bracket 40 in the vehicle width direction is reduced except for an outside wall 48, an outer peripheral wall 49 thereof, and cylindrical walls 41a, 47a and the like which form the above-mentioned respective seat portions. Here, a wall thickness of the inside of the support arm 45 of each bracket 40 in the vehicle width direction is reduced in the same manner. Further, in a space defined by reducing the wall thickness of the body 43 of either one of respective brackets 40 (the left-side bracket 40 in this embodiment), a light circuit 60 which controls lighting of the head lamp 30 is arranged.

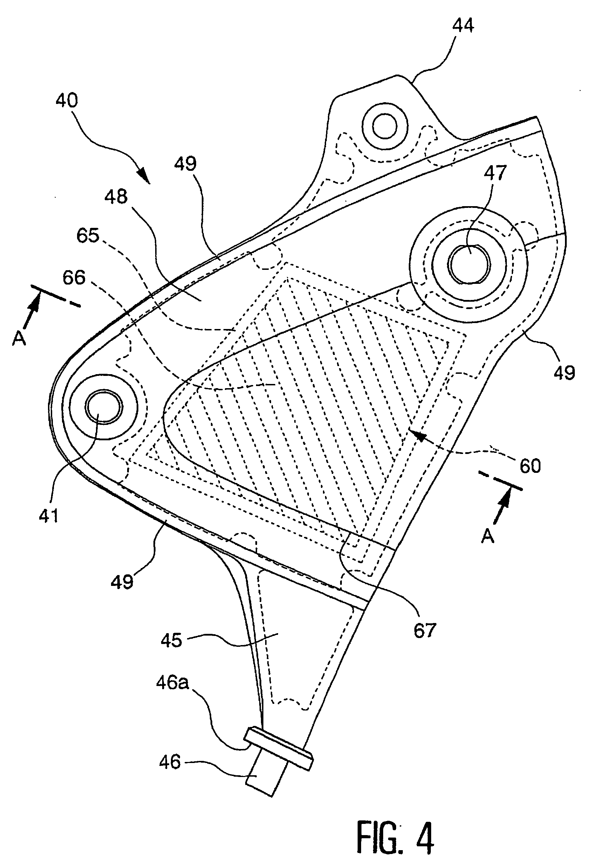

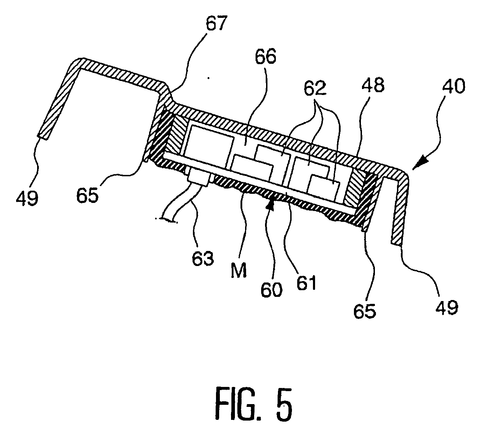

To explain the embodiment also in conjunction with Fig. 4 and Fig. 5, an erection wall 65 which projects from an inner surface of the outside wall 48 toward the inside in the vehicle width direction is formed on the left-side bracket 40. The erection wall 65 surrounds an area or a zone having an approximately trapezoidal shape inside an outer peripheral wall 49 and hence, an accommodating portion 66 for the lighting circuit 60 is defined. Then, the lighting circuit 60 in a state that the various circuit components 62 are mounted on a board 61 is mounted in the accommodating portion 66 such that the circuit components 62 face the outside wall 48 and, thereafter, the accommodating portion 66 is sealed with an urethane-based resin mold M, for example, so as to integrally form the bracket 40 and the lighting circuit 60. In such a state, the circuit components 62 of the lighting circuit 60 are arranged such that the circuit components 62 having higher capacities are arranged closer to the outside wall 48 of the bracket 40. Further, a high voltage line 63 is extended from the lighting circuit 60 to the inside in the vehicle width direction, wherein the head lamp 30 and the lighting circuit 60 are electrically connected to each other by the high voltage line 63. Here, a stepped portion 67 which is served for providing the reinforcement and an accent in appearance is formed on the outside wall 48 of the bracket 40.

According to the above-mentioned embodiment, the bracket 40 and the lighting circuit 60 are integrally formed by incorporating the lighting circuit 60 into one of the pair of brackets 40, 40 which support the discharge lamp-type head lamp 30 such that the brackets 40, 40 sandwich the head lamp 30. Accordingly, parts and operations for mounting the lighting circuit 60 on the vehicle body is not necessary. Further, since the lighting circuit 60 is arranged close to the head lamp 30, a length of the high voltage line 63 which connects the lighting circuit 60 and the head lamp 30 can be minimized and hence, the cost can be largely reduced and the wiring of the high voltage line 63 can be simplified. Still further, tasks to be solved in terms of the wiring layout of the high voltage line 63, that is, the measure for insulation, the countermeasure against the high frequency troubles, the influence attributed to bending of the high voltage line 63 having a relatively large diameter at the time of steering, and the like can be reduced. In addition, since the lighting circuit 60 is accommodated in the inside of the bracket 40, the appearance of the vehicle is not damaged, that is, the vehicle exhibits the favorable appearance. The above-mentioned constitution is particularly suitable for a motorcycle 1 which exposes the head lamp 30.

Further, compared to a case that the lighting circuit 60 is arranged in the inside of the head lamp 30, this embodiment can miniaturize the head lamp 30 per se and hence, it is possible to enhance the degree of freedom in layout and formability of the vehicle body. Particularly, by mounting the lighting circuit 60 in the inside of the bracket 40 which supports the head lamp 30 from the sides of the head lamp 30, the lighting circuit 60 is arranged at a position where the lighting circuit 60 overlaps the head lamp 30 in a side view. Accordingly, it is possible to favorably arrange parts which extend from the handle 23 such as the clutch oil hose 25b, the brake oil hose 25c, the throttle cable, the harnesses and the like without narrowing the limited space defined between the head lamp 30 and the head pipe 6.

Further, each bracket 40 is formed of an aluminum die-cast product and, at the same time, the wall thickness of the bracket 40 is reduced toward the inside in the vehicle width direction and hence, the weight of the bracket 40 can be largely reduced. Further, the inner space formed by the reduction of the wall thickness of the bracket 40 is effectively utilized as the accommodating portion 56 for the lighting circuit 60 and, at the same time, it is possible to protect the lighting circuit 60. Further, by arranging the circuit components 62 of the lighting circuit 60 having the higher capacities close to the outside wall 48 of the bracket 40, it is also possible to utilize the bracket 40 as a heat sink whereby heat generated by the lighting circuit 60 can be effectively radiated. Here, by forming the stepped portion 67 formed in the outside wall 48 of the bracket 40 along the erection wall 65 which defines the accommodating portion 56 for the lighting circuit 60, it is possible to prevent shrinkage marks formed on an outer surface of the bracket 40 attributed to the erection wall 65.

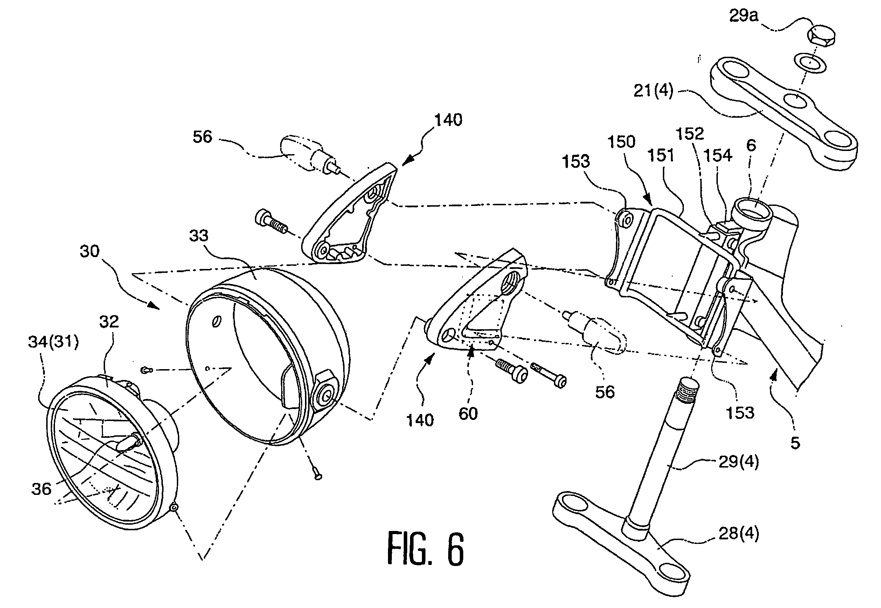

Next, the second embodiment of the invention is explained based on Fig. 6 also using Fig. 1 and Fig. 2. Here, parts identical with the parts of the above-mentioned embodiment are given the same symbols and their explanation is omitted.

This embodiment is characterized in that the head lamp 30 is mounted on the body frame 5 (the head pipe 6) by way of brackets 140, 140 and a lamp stay 150. As shown in Fig. 6, the lamp stay 150 includes an approximately rectangular stay body 51. To an approximately center portion in the left-and-right direction of a rear portion of the stay body 151, a clamp flange 152 is provided, while to both ends of a front portion of the stay body 151, connection flanges 153, 153 for connection with the brackets 140, 140 are respectively provided. On the other hand, a flange 154 corresponding to the clamp flange 152 is formed on the head pipe 6 in a projecting manner, wherein the flange 154 and the clamp flange 152 are fastened to each other by bolts and nuts. Rear portions of respective brackets 140 are respectively fixed to the connection flanges 153 whereby the respective brackets 140 and the head lamp 30 are mounted on the head pipe 6. Here, the respective brackets 140 are characterized by eliminating the connection portions 44 and the support arms 45 compared to the above-mentioned brackets 40. Further, the lighting circuit 60 of the head lamp 30 is mounted in the inside of either one (the left-side bracket 40 in this embodiment) of respective brackets 140.

According to the above-mentioned second embodiment, the cost can be largely reduced and the wiring of the high voltage line 63 can be simplified without requiring parts and operations for mounting the lighting circuit 60 to the vehicle body. Particularly, it is possible to easily integrally form the respective brackets 140 and the lamp stays 150 and hence, the number of parts and the man-hours can be further reduced.

Further, it is possible to enhance the degree of freedom in layout and formability of the vehicle body by preventing the head lamp 30 from becoming large-sized and, at the same time, the space defined between the head lamp 30 and the head pipe 6 can be effectively utilized. Further, the brackets 140 constitute heat sinks and hence, the heat radiation property of the lighting circuit 60 can be enhanced.

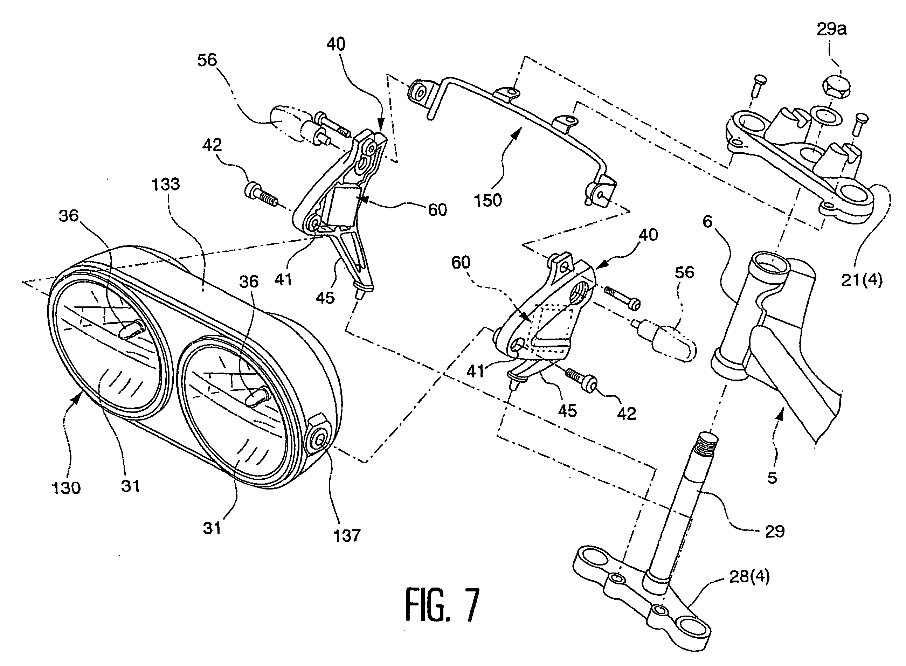

Next, the third embodiment of invention is explained based on Fig. 7 also using Fig. 1 and Fig. 2. Here, parts identical with the parts of the above-mentioned embodiment are given the same symbols and their explanation is omitted.

This embodiment is characterized in that a head lamp 130 of a left-and-right two-lamp discharge lamp type is adopted in place of the above-mentioned head lamp 30. As shown in Fig. 7, the two-lamp type head lamp 130 is formed by arranging lamp bodies 31, 31 in parallel in the inside of a lamp case 133 having an elongated circular opening. Fixing nut holes 137 are respectively formed in left and right outer sides of the lamp case 133 and the head lamp 130 and the respective brackets 40 are integrally fixed to each other by fastening fixing bolts 42 which are inserted into the through holes 41 of the respective brackets 40 into the respective fixing nut holes 137. Lower portions of the brackets 40 are supported on the bottom bridge 28 by the support arms 45, while upper portions of the brackets 40 are fixed to the top bridge 21 by way of a lamp stay 150. Accordingly, the respective brackets 40 and the head lamp 130 are mounted on the steering stem 4. Here, the lamp stay 150 is extended in the left-and-right direction compared to the above-mentioned lamp stay 50. Further, the lighting circuit 60 which controls lighting of the right-side light body of the head lamp 130 is provided in the inside of the right-side bracket 40, while the lighting circuit 60 which controls lighting of the left-side light body of the head lamp 130 is provided in the inside of the left-side bracket 40.

According to the above-mentioned third embodiment, the two-lamp type head lamp 130 is supported by the pair of brackets 40, 40, the lighting circuit 60 of the right-side light body of the head lamp 130 is incorporated into and is integrally formed with the right-side bracket 40, and the lighting circuit 60 of the left-side light body of the head lamp 130 is incorporated into and is integrally formed with the left-side bracket 40. Due to such a constitution, parts and operations for mounting the respective lighting circuits 60 to a vehicle body become unnecessary and, at the same time, a length of high voltage lines 63 which connect the respective light bodies of the head lamp 130 with the lighting circuits 60 can be minimized whereby the cost can be largely reduced and the wiring of the high voltage lines 63 can be also simplified.

Further, it is possible to enhance the degree of freedom in layout and formability of the vehicle body by preventing the head lamp 130 from becoming large-sized and, at the same time, the space defined between the head lamp 130 and the head pipe 6 can be effectively utilized. Further, the respective brackets 40 constitute heat sinks and hence, the heat radiation property of the lighting circuits 60 can be enhanced.

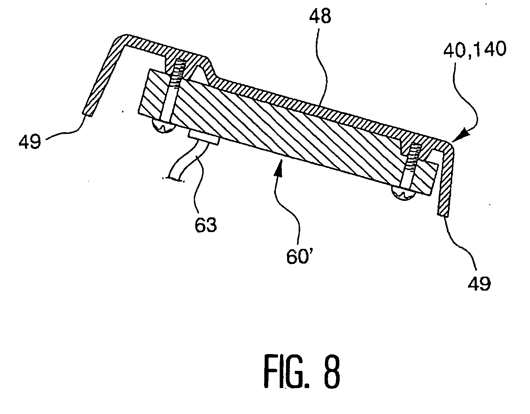

Here, the invention is not limited to the above-mentioned respective embodiments and, for example, as shown in Fig. 8, the discharge lamp may be configured such that the lighting circuit 60 is formed as a lighting circuit 60' which constitutes a separate body with respect to the brackets 40, 140 and these parts are preliminarily assembled at a separate step. Further, the shape of the head lamp 30 is not limited to a circular type and may be a quadrangular shape or a non-circular shape. Further, a two-lamp type head lamp 130 may be mounted on the vehicle frame 5. In this case, it is preferable to arrange the lighting circuit 60' close to the outside wall 48 to enhance the heat radiation. Still further, the brackets 40, 140 may not be aluminum die-cast products but may be formed using other metallic material or other method.

Further, the explanation has been made with respect to the example in which the invention is applied to the head lamp of the motorcycle in the above-mentioned respective embodiments. However, not to mention that the invention is not limited to the motorcycle, the invention is also applicable to a three-wheeled vehicle or a four-wheeled vehicle. Further, even when the invention is applied to a fog lamp, an auxiliary lamp or the like, it is possible to obtain the same advantageous effects. Further, it is needless to say that the constitutions of the above-mentioned embodiments are merely examples and various modifications are conceivable without departing from the scope of the invention defined by the appended claims.

As has been explained heretofore, according to the invention described in claim 1, by integrally forming the bracket which supports the discharge lamp and the lighting circuit, the lighting circuit can be arranged close to the discharge lamp and hence, the wiring of the high voltage line which connects the discharge lamp and the lighting circuit can be simplified. Further, parts for supporting the lighting circuit and the assembling operation of these parts can be largely reduced whereby the cost can be reduced. Further, it is possible to prevent the discharge lamp from becoming large-sized and hence, the freedom in layout and formability of the vehicle body can be enhanced.

According to the second aspect of the invention, the space defined between the head pipe and the discharge lamp can be effectively utilized as the line arrangement space of other parts extended from the handle particularly and hence, the freedom in layout and formability of the vehicle body can be further enhanced.

According to the third aspect of the invention, in the discharge lamp device for vehicle, by forming the bracket using a metal member, it is possible to enhance the heat radiation property of the lighting circuit. Particularly, by forming the bracket using the aluminum material, the reduction of weight can be achieved and the heat radiation property can be enhanced.

Description of the main reference numerals and signs
5: vehicle body frame
6: head pipe
30, 130: head lamp (discharge lamp)
40, 140: bracket
60, 60': lighting circuit

## Claims

1. A discharge lamp device for vehicle, in which a discharge lamp (30) is supported by a bracket (40), comprising a lighting circuit (60) which is mounted inside the bracket (40),
**characterized in that** the wall thickness of the inside of the body (43) of the bracket (40) in the vehicle width direction is reduced except for an outside wall (48), an outer peripheral wall (49) and cylindrical walls (41a, 47a) in order to define a space inside which the lighting circuit (60) is arranged, so that the bracket (40) sandwiches and insulates the lighting circuit (60) from the outside.

2. A discharge lamp device for vehicle according to claim 1, wherein the discharge lamp (30) is arranged in front of a head pipe (6) of a body frame (5), and the bracket (40) supports the discharge lamp from sides of the discharge lamp.

3. A discharge lamp device for vehicle according to claim 1 or claim 2, wherein the bracket (10) is constituted of a metal member.

## Patentansprüche

1. Entladungslampenvorrichtung für ein Fahrzeug, wobei eine Entladungslampe (30) von einem Bügel (40) gehaltert ist, mit einer Beleuchtungsschaltung (60), die in dem Bügel (40) angebracht ist,
**dadurch gekennzeichnet, dass** die Wanddicke des Inneren des Körpers (43) des Bügels (40) in der Fahrzeug-Breitenrichtung außer einer Außenwand (48), einer Außenumfangswand (49) und zylindrischen Wänden (41a,47a) verringert ist, um einen Raum festzulegen, in dem die Beleuchtungsschaltung (60) so angeordnet ist, dass der Bügel (40) die Beleuchtungsschaltung (60) von außen sandwichartig umschließt und isoliert.

2. Entladungslampenvorrichtung für ein Fahrzeug nach Anspruch 1, wobei die Entladungslampe (30) vor einem Kopfrohr (6) eines Körperrahmens (5) angeordnet ist, und der Bügel (40) die Entladungslampe von den Seiten der Entladungslampe her haltert.

3. Entladungslampenvorrichtung für ein Fahrzeug nach Anspruch 1 oder 2, wobei der Bügel (40) aus einem Metallelement gebildet ist.

## Revendications

1. Dispositif à lampe à décharge pour véhicule, dans lequel une lampe à décharge (30) est supportée par un support (40), comprenant un circuit d'éclairage (60) qui est monté à l'intérieur du support (40),
**caractérisé en ce que** l'épaisseur de paroi de l'intérieur du corps (43) du support (40) dans la direction de largeur du véhicule est réduite à l'exception d'une paroi extérieure (48), d'une paroi périphérique extérieure (49) et de parois cylindriques (41a, 47a) afin de définir un espace à l'intérieur duquel le circuit d'éclairage (60) est agencé, de sorte que le support (40) entoure le circuit d'éclairage (60) et l'isole de l'extérieur.

2. Dispositif à lampe à décharge pour véhicule selon la revendication 1, dans lequel la lampe à décharge (30) est agencée devant un tube avant (6) d'un cadre (5), et le support (40) supporte la lampe à décharge à partir des côtés de la lampe à décharge.

3. Dispositif à lampe à décharge pour véhicule selon la revendication 1 ou la revendication 2, dans lequel le support (40) est constitué d'un élément métallique.
